# EUROPÄISCHE PATENTANMELDUNG

(11) **EP 3 741 971 A1**
(43) Veröffentlichungstag der Anmeldung: **25.11.2020**
(21) Anmeldenummer: 20177741.4
(22) Anmeldetag: 21.11.2014
(51) Int. Cl.: F02C 3/13, F02C 7/08, F01D 15/10, F01D 19/00, F02C 7/143, F02C 9/18

(54) **MIKROGASTURBINENANORDNUNG**

(30) Priorität: 21.11.2013 DE 102013112892
(62) Teilanmeldung aus: 14194344.9
(71) Anmelder: Deutsches Zentrum für Luft- und Raumfahrt e.V., 51147 Köln (DE)
(72) Erfinder: Huber, Dr. Andreas, 78549 Spaichingen (DE); Henke, Martin, 72076 Tübingen (DE)
(74) Vertreter: Paul & Albrecht Patentanwälte PartG mbB

(57) **Zusammenfassung**

Die vorliegende Erfindung betrifft eine Mikrogasturbinenanordnung mit
- einem Verdichter (1), um Verbrennungsluft anzusaugen und zu verdichten,
- einer mit dem Verdichter (1) durch eine Verbrennungsluftleitung (7) verbundenen Brennkammer (3), in welcher Brennstoff mit der Verbrennungsluft verbrannt wird,
- einer Turbine (4), die mit der Auslassseite der Brennkammer (3) über eine Rauchgasleitung (8) verbunden ist und durch die heißen Abgase aus der Brennkammer (3) angetrieben wird, und
- einem Generator (5) zur Stromerzeugung,
wobei der Verdichter (1) und der Generator (5) auf einer gemeinsamen Turbinenwelle (4a) sitzen und über die Turbine (4) angetrieben werden,
wobei in der Verbrennungsluftleitung (7) zwischen dem Verdichter (1) und der Brennkammer (3) ein zuschaltbarer Teillastverdichter (10) angeordnet ist und die Verbrennungsluftleitung (7) eine parallel zu dem Teillasterverdichter (10) geschaltete und diesen umgehende Teillastverdichter-Bypassleitung (7b) aufweist, und dass in der Verbrennungsluftleitung (7) Schaltmittel (11) vorgesehen sind, um in einem Teillastbetrieb der Mikrogasturbinenanordnung den Teillastverdichter (10) zuzuschalten, so dass von dem Verdichter (1) komprimierte Verbrennungsluft zu dem Teillastverdichter (10) geführt und dort weiter verdichtet wird, und im Volllastbetrieb den Teillastverdichter (10) wegzuschalten, so dass die im Verdichter (1) komprimierte Verbrennungsluft an dem Teillastverdichter (10) vorbei durch die Teillastverdichter-Bypassleitung (7b) unmittelbar in die Brennkammer (3) strömt.

## Beschreibung

Die vorliegende Erfindung betrifft eine Mikrogasturbinenanordnung mit
- einem Verdichter, um Verbrennungsluft anzusaugen und zu verdichten,
- einer mit dem Verdichter durch eine Verbrennungsluftleitung verbundenen Brennkammer, in welcher Brennstoff mit der Verbrennungsluft verbrannt wird,
- einer Turbine, die mit der Auslassseite der Brennkammer über eine Rauchgasleitung verbunden ist und durch die heißen Abgase aus der Brennkammer angetrieben wird, und
- einem Generator zur Stromerzeugung,
wobei der Verdichter und der Generator auf einer gemeinsamen Turbinenwelle sitzen und über die Turbine angetrieben werden,
wobei in der Verbrennungsluftleitung zwischen dem Verdichter und der Brennkammer ein zuschaltbarer Teillastverdichter angeordnet ist und die Verbrennungsluftleitung eine parallel zu dem Teillasterverdichter geschaltete und diesen umgehende Teillastverdichter-Bypassleitung aufweist, und wobei in der Verbrennungsluftleitung Schaltmittel vorgesehen sind, um in einem Teillastbetrieb der Mikrogasturbinenanordnung den Teillastverdichter zuzuschalten, so dass von dem Verdichter komprimierte Verbrennungsluft zu dem Teillastverdichter geführt und dort weiter verdichtet wird, und im Volllastbetrieb den Teillastverdichter wegzuschalten, so dass die im Verdichter komprimierte Verbrennungsluft an dem Teillastverdichter vorbei durch die Teillastverdichter-Bypassleitung unmittelbar in die Brennkammer strömt.

Auf dem Weg zu einer emissionsarmen Energieversorgung werden die fossilen Energieträger Kohle, Öl und Erdgas noch einen wesentlichen Beitrag leisten müssen. Da diese Energieträger nur noch begrenzt zur Verfügung stehen und ihre Verbrennung außerdem zur Emission von Treibhausgasen führt, gilt es, diese Ressourcen sparsam und umweltfreundlich zu verwenden.

Die sogenannte Kraft-Wärme-Kopplung (KWK) soll hierbei einen wesentlichen Beitrag leisten. Bei dieser Technologie werden Strom und Wärme nicht örtlich getrennt in verschiedenen Anlagen, sondern als Koppelprodukte gemeinsam in einer Anlage erzeugt. Hierdurch können hohe Nutzungsgrade erzielt werden, so dass die auftretenden Energieverluste gering sind. Gleichzeitig werden umweltschädliche Emissionen auf einem niedrigen Niveau gehalten. Schließlich werden durch die dezentrale Stromerzeugung die elektrischen Versorgungsnetze entlastet.

Die Anwendung der Kraft-Wärme-Kopplung in zentralen Heizkraftwerken ist derzeit Ballungsgebieten vorbehalten, da die Leitung von Wärme über größere Distanzen zum einen sehr aufwendig, und zum anderen mit hohen Verlusten behaftet ist. Insofern wird die Technologie der Kraft-Wärme-Kopplung in erster Linie in kleinen und mittelgroßen Blockheizkraftwerken (BHKW) eingesetzt, die ohne aufwendige Wärmeverteilungsnetze auskommen und derzeit hohe Gesamtwirkungsgrade im Bereich von 90% erreichen. Primäre Einsatzgebiete sind hierbei große Wohngebäude, Krankenhäuser sowie Industrie- und Gewerbebetriebe. Zusätzlich ist geplant, dezentrale BHKW-Anlagen als sogenannte virtuelle Kraftwerke einzusetzen, die Kapazitätsschwankungen in den Stromnetzen bei wachsenden Stromanteilen aus erneuerbaren Energien ausgleichen sollen.

Die Hauptkomponenten eines Blockheizkraftwerkes sind ein Antriebsaggregat, ein Generator zur Stromerzeugung und ein Wärmeübertrager zur Wärmeauskopplung. Darüber hinaus umfasst die Ausrüstung eines Blockheizkraftwerkes in der Regel Steuerungs- und Regelungseinrichtungen, Komponenten zur Minderung von Schadstoffemissionen wie beispielsweise Drei-Wege-Katalysatoren zur Stickoxidreduzierung und CO-Oxidation, eine Abgasanlage, Schallschutzeinrichtungen etc. Als Antriebsaggregate kommen in den meisten Fällen Verbrennungsmotoren zum Einsatz. In jüngerer Zeit werden auch in zunehmendem Maße Gasturbinen und hier insbesondere kompakte Gasturbinen mit einer Leistung bis herunter zu 30kWₑₗ, die auch Mikrogasturbinen genannt werden, zum Einsatz. Beim Einsatz einer Mikrogasturbine als Antriebsaggregat ist üblicherweise ein Rekuperator zur Erhöhung des elektrischen Wirkungsgrades der Mikrogasturbinenanordnung vorgesehen. Derartige Mikrogasturbinen arbeiten nach dem Joule-Prozess und umfassen einen Verdichter (Kompressor), der aus der Umgebung Luft ansaugt und sie verdichtet. Die verdichtete Luft tritt in einem Rekuperator ein, in dem sie durch heiße Abgase vorgewärmt wird. In der Brennkammer wird die verdichtete und vorgewärmte Luft mit eingedüstem Brennstoff unter nahezu konstantem Druck verbrannt. Die bei der Verbrennung entstehenden Verbrennungsgase werden in einer Turbine entspannt, wodurch die Turbinenwelle mit ihren Komponenten angetrieben wird. Dabei wird ein Teil der in den Verbrennungsgasen enthaltenen Enthalpie in mechanische Energie umgewandelt. Ein Großteil dieser mechanischen Energie (bis zu etwa 70%) wird zum Antrieb des Verdichters genutzt, welcher auf der Welle der Turbine sitzt, der verbleibende Teil steht als nutzbare elektrische Energie Wₑₗ zur Verfügung, die durch Umwandlung von mechanischer Energie im Generator erzeugt wird, der ebenfalls von der Turbine angetrieben wird. Die noch heißen Abgase wärmen im Rekuperator die Verbrennungsluft vor und verlassen danach die Mikrogasturbine. Die verbleibende thermische Energie des Abgases wird daraufhin je nach Anwendungsgebiet verwertet.

BHKW-Anlagen bzw. Mikrogasturbinen werden im Allgemeinen für lange Laufzeiten mit Volllast konzipiert, um wirtschaftlich betrieben werden zu können. Daher ist eine Anpassung an den Strom- und Wärmebedarf der angeschlossenen Verbraucher erforderlich. Da das BHKW Strom und Wärme stets als Koppelprodukte in einem nahezu festen Verhältnis zueinander liefern, muss der Strom- oder der Wärmebedarf der Verbraucher als Führungsgröße für die Auslegung und den Betrieb des BHKW ausgewählt werden. Der erzeugte Strom wird üblicherweise von den an das BHKW angeschlossenen Verbrauchern selbst genutzt, überschüssige Energie kann in das öffentliche Netz eingespeist werden. Die in dem BHKW erzeugte Wärme kann jedoch bei zurückgehendem Wärmebedarf der angeschlossenen Verbraucher nicht oder nur in begrenztem Umfang, zum Beispiel in einem Wärmespeicher, zwischengespeichert werden.

Daher wird in den meisten Fällen der Wärmebedarf der Verbraucher als Führungsgröße für den Betrieb eines BHKW gewählt. Bei dieser wärmegeführten Betriebsweise bestimmt die Wärmenachfrage die Laststufe des BHKW.

Mikrogasturbinen zeichnen sich im Teillastbetrieb aufgrund der drehzahlgesteuerten Fahrweise durch einen deutlich verringerten elektrischen Wirkungsgrad und erhöhte CO-Emissionen aus. Der verringerte Wirkungsgrad im Teillastbetrieb ist auf das reduzierte Druckverhältnis, welches durch die im Verhältnis zum Volllastbetrieb geringere Drehzahl und den reduzierten Massenstrom bedingt ist, und der damit verbundenen geringeren Turbineneintrittstemperatur bei konstant erhaltener Turbinenaustrittstemperatur zurückzuführen.

Ferner muss das mögliche Luft-Brennstoff-Verhältnis zwischen Volllastbetrieb und Teillastbetrieb abgestimmt werden. In der Regel wird die Teillast durch die magere Löschgrenze und die aufgrund der geringeren Flammentemperatur erhöhten CO-Emissionen begrenzt. Zwischen Teillast und Volllast erhöht sich aufgrund des steigenden Druckverhältnisses der Brennstoffmassenstrom stärker als der Luftmassenstrom, was zu einem niedrigeren Luft-Brennstoff-Verhältnis führt. Dies kann zu erhöhten NOx-Emissionen aufgrund der erhöhten Flammentemperatur führen. Ein weiteres Problem bei derzeitigen Mikrogasturbinen stellt die hohe Materialbeanspruchung und die damit verbundene geringere Lebensdauer der Heißgasbauteile aufgrund des Teillastbetriebes und der damit verbundenen Laständerungen/Laständerungsgeschwindigkeiten dar.

Wegen dieser mit dem Teillastbetrieb verbundenen Probleme und der Forderung nach hohen Betriebsstunden sowie einer hohen Effizienz werden Blockheizkraftwerke/Mikrogasturbinen vorwiegend im Volllastbetrieb betrieben, so dass die abgegebene Wärmemenge relativ konstant ist und kaum variiert werden kann. Um den gesamten Wärmebedarf über das Jahr abzudecken, können BHKW nur mit Hilfe eines Spitzenlastkessels und eines Wärmespeichers betrieben werden, um die in Spitzenzeiten benötigte Wärmeenergie zur Verfügung stellen zu können. Im Rahmen der Energiewende und dem Ausbau der erneuerbaren Energien werden in Zukunft jedoch hochflexible Kraftwerke, die eine flexible Wärmeauskopplung ermöglichen und auch bei niedrigem Teillastbetrieb mit hohen elektrischen Wirkungsgraden und gleichzeitig geringen Emissionen betrieben werden können, eine entscheidende Rolle zur Sicherstellung des Strombedarfs und zur Stabilisierung des Netzes spielen.

Aufgrund dieser Problematik gehen die Bestrebungen dahin, den elektrischen Wirkungsgrad und die Umweltverträglichkeit von Mikrogasturbinen im Teillastbetrieb zu verbessern, um auf diese Weise die Möglichkeit zu schaffen, Mikrogasturbinen bzw. BHKW auch effizient im Teillastbetrieb betreiben zu können und somit auf Änderungen beim Leistungsbedarf, insbesondere beim Wärmebedarf durch Umschaltung zwischen Volllast- und Teillastbetrieb reagieren zu können.

Ferner ist aufgrund des geringen Wasseranteils im Abgas der Mikrogasturbinenanordnung als Folge des hohen Luftüberschusses eine Brennwertnutzung, wie sie im Bereich der modernen Heizungsbrenner mit einem geringen Luftüberschuss üblich ist, nicht möglich.

Turbinenanordnungen mit einem Verdichter, einer Brennkammer, einer Turbine und einem Generator sind beispielsweise aus der JP 2002-004814 A bekannt. Diese umfasst einen ersten Betriebsmodus, bei dem in einem Verdichter komprimierte Verbrennungsluft durch einen weiteren Verdichter und von dort durch einen Wärmetauscher strömt, in dem die komprimierte Verbrennungsluft erwärmt wird, bevor sie in eine Brennkammer strömt. Mittels eines Ventils kann die Gasturbinenanordnung zwischen dem ersten Betriebsmodus und einem zweiten Betriebsmodus umgeschaltet werden, bei dem die in dem Verdichter komprimierte Verbrennungsluft durch eine Bypassleitung an dem weiteren Verdichter und dem Wärmetauscher vorbei unmittelbar in die Brennkammer strömt. Die komprimierte Verbrennungsluft wird also nur in dem ersten Betriebsmodus von dem Wärmetauscher erwärmt.

Durch eine zweistufige Komprimierung von Verbrennungsluft im Teillastbetrieb erhöht sich im Teillastbetrieb das Druckverhältnis. Im Ergebnis ist es durch den zusätzlich vorgesehenen Teillastkompressor möglich, ein konstantes oder nahezu konstantes Druckverhältnis zwischen Teillastpunkt (in der Regel 50 bis 75% Drehzahl) und Volllastpunkt über verschiedene Drehzahlen und Massenströme bereitzustellen. Mit dem erreichten konstanten Druckniveau/Druckverhältnis zwischen Teillast und Volllast kann bei gleichbleibender Turbinenaustrittstemperatur die Turbineneintrittstemperatur auf gleichem Niveau gehalten werden. Auf diese Weise kann im Teillastbetrieb ein ähnlich hoher elektrischer Wirkungsgrad erreicht werden wie im Volllastbetrieb.

Ferner kann die Verbrennung in Teillast, Volllast und zwischen Teil- und Volllast mit ähnlich optimalem Brennstoff-Luftverhältnissen und damit ähnlichen Flammentemperaturen und CO- und NOx-Emissionen betrieben werden. Die einzige Einschränkung besteht darin, dass die Brennkammer in Teillast mit einem reduzierten Volumenstrom arbeiten muss, was gegebenenfalls Einfluss auf die Brennstoff/Luftmischungsqualität und die lokalen Flammentemperaturen haben kann.

Im Ergebnis bleiben aufgrund des erreichten konstanten Druckverhältnisses und den damit konstanten Turbineneintritts/Turbinenaustritts-Temperaturen und Verdichteraustrittstemperaturen, die gleichbedeutend zu gleichbleibenden Rekuperatoreintritts- und -austrittstemperaturen sind, die thermischen Belastungen der Mikrogasturbine im Teil- und Volllastbetrieb nahezu konstant. Damit wird die Mikrogasturbine weniger durch Lastwechsel beeinflusst, so dass die Lebensdauer der Heißgasbauteile erhöht ist.

Aufgabe der vorliegenden Erfindung ist es daher, eine Mikrogasturbine der eingangs genannten Art so auszugestalten, dass ein optimierter Betrieb möglich ist.

Diese Aufgabe ist bei einer Mikrogasturbinenanordnung der eingangs genannten Art dadurch gelöst, dass in der Rauchgasleitung zwischen der Brennkammer und der Turbine eine zuschaltbare Teillastturbine angeordnet ist und Schaltmittel vorgesehen sind, die im Teillastbetrieb der Mikrogasturbinenanordnung die Teillastturbine zuschalten, so dass die heißen Abgase aus der Brennkammer hintereinander in der Teillastturbine und der Turbine entspannt werden, und im Volllastbetrieb der Mikrogasturbinenanordnung die Teillastturbine abschalten, so dass die heißen Abgase an der Teillastturbine vorbeiströmen und nur in der Turbine entspannt werden.

In diesem Fall kann die Rauchgasleitung eine parallel zu der Teillastturbine geschaltete und diese umgehende Teillastturbinen-Bypassleitung aufweisen, in welcher bevorzugt auch die Schaltmittel angeordnet sind. Als Schaltmittel kann wenigstens ein Ventil, insbesondere ein Absperr- oder Steuerventil vorgesehen sein.

Bei dieser Ausgestaltung sitzt der Teillastverdichter bevorzugt auf der Turbinenwelle der Teillastturbine und wird über diese angetrieben. Somit erfolgt nicht nur eine zweistufige Verdichtung der Verbrennungsluft, sondern auch eine zweistufige Entspannung der heißen Abgase, wobei die Teillastturbine eine Hochdruckturbinenstufe und die Turbine eine Niederdruckturbinenstufe bildet.

Alternativ ist die Aufgabe bei einer Mikrogasturbinenanordnung der eingangs genannten Art dadurch gelöst, dass in einer sich an die Turbine auslassseitig anschließenden Abgasleitung eine zuschaltbare Teillastturbine angeordnet ist, wobei Schaltmittel vorgesehen sind, die im Teillastbetrieb der Mikrogasturbinenanordnung die Teillastturbine zuschalten, so dass die heißen Abgase aus der Brennkammer hintereinander in der Turbine und der Teillastturbine entspannt werden, und im Volllastbetrieb der Mikrogasturbinenanordnung die Teillastturbine abschalten, so dass die heißen Abgase an der Teillastturbine vorbeiströmen und nur in der Turbine entspannt werden.

In diesem Fall weist die Abgasleitung vorzugsweise eine parallel zu der Teillasturbine geschaltete und diese umgehende Teillastturbinen-Bypassleitung auf, in welcher die Schaltmittel vorgesehen sein können. Bevorzugt sitzt der Teillastverdichter auf der Turbinenwelle der Teillastturbine und wird über diese angetrieben.

Bei dieser Ausführungsform bildet die Turbine die Hochdruckturbinenstufe und die Teillastturbine die Niederdruckturbinenstufe. Entsprechend liegt das Ventil, über welches die Teillastturbine zugeschaltet oder abgeschaltet wird, auf der Seite der Niederdruckturbinenstufe, d.h. in einem Bereich, in welchem die Abgase aufgrund der Entspannung in der Hochdruckturbinenstufe bereits deutlich abgekühlt sind. Somit kann das Ventil kostengünstig hergestellt oder bei gleicher Materialauswahl länger betrieben werden, so dass es eine erhöhte Lebensdauer besitzt. Bei Mikrogasturbinen mit hohen Turbineneintrittstemperaturen ist der Einsatz von Ventilen auf der Turbine nicht mehr oder nur mit zusätzlichem Kühlungsaufwand zu bewältigen.

Eine weitere Ausführungsform der Erfindung schlägt vor, dass in der Verbrennungsluftleitung zwischen dem Verdichter und der Brennkammer ein Rekuperator vorgesehen ist, um vom Verdichter komprimierte Verbrennungsluft vor dem Eintritt in die Brennkammer vorzuwärmen, wobei die warme Seite des Rekuperators mit der Turbine über die Abgasleitung verbunden ist, um dem Rekuperator heiße Abgase zuzuführen. In diesem Fall kann die zuschaltbare Teillastturbine zwischen der Turbine und dem Rekuperator angeordnet sein.

Gemäß einer Ausführungsform der Erfindung ist vorgesehen, dass der Teillastverdichter mit der Turbinenwelle im Teillastbereich über eine Kupplung verbunden ist und von dieser angetrieben wird und im Volllastbetrieb von der Turbinenwelle entkoppelt ist. In diesem Fall kann der unterschiedliche Massenstrom bei ähnlichen Druckverhältnissen in Teil- und Volllast durch geeignete Maßnahmen wie eine variable Turbinengeometrie (VTG) realisiert werden.

In weiterer Ausgestaltung der Erfindung kann vorgesehen sein, dass zwischen der Turbine und der Teillastturbine ein Zwischenüberhitzer, insbesondere in der Form einer weiteren Brennkammer vorgesehen ist, in welcher im Teillastbetrieb der Mikrogasturbinenanordnung die heißen Abgase weiter erwärmt werden.

Alternativ oder zusätzlich kann zwischen dem Verdichter und dem Teillastverdichter eine Kühleinrichtung insbesondere in der Form eines Wärmetauschers vorgesehen sein, in welchem im Teillastbetrieb der Mikrogasturbinenanordnung die von dem Verdichter komprimierte Luft vor dem Eintritt in den Teillastverdichter abgekühlt wird.

Durch die Maßnahmen einer Zwischenüberhitzung zwischen der Hochdruck- und der Niederdruckturbine bzw. einer Zwischenkühlung zwischen dem Niederdruckverdichter und dem Hochdruckverdichter kann eine weitere Effizienzverbesserung im Teillastbetrieb erreicht werden.

In weiterer Ausgestaltung der Erfindung ist vorgesehen, dass in der Abgasleitung seriell zu dem Rekuperator wenigstens ein weiterer Rekuperator vorgesehen ist, wobei die Rekuperatoren auf der kalten Seite nacheinander von der verdichteten Verbrennungsluft und auf der heißen Seite von den heißen Abgasen durchströmt werden. Bei dieser Ausführungsform bildet dann der in Strömungsrichtung des Abgases erste Rekuperator einen Hochtemperatur-Rekuperator und der dahinterliegende Rekuperator einen Niedertemperatur-Rekuperator. Auf diese Weise kann insbesondere beim Niedertemperatur-Rekuperator auf kostenintensive Werkstoffe verzichtet werden.

Zusätzlich können alle Varianten der erfindungsgemäßen Mikrogasturbinenanordnung mit ergänzenden Abgaswärmekonzepten realisiert werden. Beispielsweise kann dem Rekuperator vor- und/oder nachgeschaltet wenigstens ein Wärmetauscher in der Abgasleitung angeordnet sein, um aus der Mikrogasturbine Wärme auszukoppeln. Ebenso ist es möglich, in der Abgasleitung parallel zu dem Rekuperator/den Rekuperatoren wenigstens einen Wärmetauscher anzuordnen, um Wärme aus der Mikrogasturbinenanordnung auszukoppeln, wobei der Abgasstrom durch den Rekuperator/die Rekuperatoren einerseits und/oder den parallel dazu geschalteten Wärmetauscher andererseits steuerbar ist. Vorzugsweise sind entsprechende Ventilmittel (Steuerventile, Regelventile), welche den Abgasstrom durch den Rekuperator/die Rekuperatoren einerseits und den Wärmetauscher andererseits steuern, stromabwärts von dem Rekuperator/Wärmetauscher vorgesehen, d.h. auf der kalten Seite der Wärmetauscheranordnung. Auf diese Weise werden die Ventile thermisch nicht stark belastet. Beispielsweise kann ein entsprechendes Ventil an der Stelle vorgesehen sein, wo die Abgasleitung und die parallele Rekuperator-Bypassleitung, in welcher der Wärmetauscher vorgesehen ist, zusammengeführt werden.

Ebenso kann vorgesehen sein, dass in der Abgasleitung parallel zu einem Rekuperator in einer Rekuperator-Bypassleitung wenigstens ein Wärmetauscher und parallel zu einem weiteren Rekuperator in einer weiteren Rekuperator-Bypassleitung wenigstens ein Wärmetauscher angeordnet ist, um Wärme aus der Mikrogasturbinenanordnung auszukoppeln, wobei der Abgasstrom durch die Rekuperatoren einerseits und/oder die jeweils parallel dazu geschalteten Wärmetauscher andererseits durch entsprechende Ventilmittel steuerbar ist. Auch hier ist zweckmäßigerweise vorgesehen, dass die Ventilmittel zur Steuerung des Abgasstroms jeweils stromabwärts von den Rekuperatoren und den parallel dazu geschalteten Wärmetauschern angeordnet und insbesondere nur jeweils an der Stelle positioniert sind, wo die Abgasleitung und die Rekuperator-Bypassleitungen, in denen die Wärmetauscher angeordnet sind, zusammengeführt werden.

Im Normalbetrieb sind die Ventilmittel zur Steuerung des Abgasstroms so eingestellt, dass der gesamte Abgasmassenstrom über den Rekuperator geführt wird. Wird nun mehr Wärme, zum Beispiel zur Warmwasser- oder Dampferzeugung benötigt als die Wärmeauskopplung über die ansonsten vorhandene Wärmetauscher liefern kann, werden die Ventilmittel so eingestellt, dass der benötigte Abgasmassenstrom über den parallel zum Rekuperator geschalteten weiteren Wärmetauscher geleitet wird. Im Extremfall wird der gesamte Massenstrom über den Wärmetauscher geleitet, um zusätzliche Wärme auszukoppeln. Hierbei ist zu beachten, dass der Verbrennungsluftmassenstrom jederzeit über den Rekuperator geführt wird und dabei die Verbrennungsluft weniger vorgewärmt wird, wenn der Abgasmassenstrom nicht vollständig über den Rekuperator geführt wird. Die flexible Wärmeauskopplung hat dementsprechend zur Folge, dass bei (vollständiger) Beaufschlagung des Wärmetauschers der Brennstoffmassenstrom in der Brennkammer gesteigert werden muss, was durch eine mehrstufige Brennkammer erreicht werden kann, in der dann die einzelnen Stufen nach Bedarf zugeschaltet werden.

Gemäß einer Ausführungsform der Erfindung kann auch vorgesehen sein, dass in der Verbrennungsluftleitung stromabwärts von dem Teillastverdichter eine den Rekuperator/die Rekuperatoren umgehende Bypassleitung vorgesehen ist, und dass Ventilmittel vorgesehen sind, um den Abgasstrom durch den Rekuperator/die Rekuperatoren und/oder die parallele Bypassleitung insbesondere in der Weise zu steuern, dass die Massenströme der durch den Rekuperator/die Rekuperatoren strömenden Verbrennungsluft und der durch den Rekuperator/die Rekuperatoren strömenden Abgase gleich ist. Durch diese Ausgestaltung wird die Möglichkeit eröffnet, die im Verdichter und gegebenenfalls im Teillastverdichter komprimierte Verbrennungsluft ganz oder teilweise an dem Rekuperator vorbeizuführen. Durch die Umgehung des Rekuperators auf der Druckseite können Druckverluste verringert werden, was den elektrischen Wirkungsgrad erhöht.

In vorteilhafter Weise sind die Einstellungen so gewählt, dass der heiße Abgasmassenstrom und der kalte Verbrennungsluftmassenstrom durch den Rekuperator etwa gleich sind. Wenn demgemäß wie zuvor beschrieben ein Teil des Abgasmassenstromes an dem Rekuperator vorbei durch den in der Rekuperator-Bypassleitung vorgesehenen Wärmetauscher geführt wird, sollte auch ein entsprechender Teil des Verbrennungsluftmassenstroms an dem Rekuperator vorbeigeführt werden. Wenn in umgekehrter Weise Verbrennungsluft an dem Rekuperator vorbeigeführt wird, um Druckverluste zu minimieren, sollte entsprechend auch ein Teil der heißen Abgase an dem Rekuperator vorbei geführt werden. Die Steuerung der Abgasmassenströme kann durch entsprechende Steuer- bzw. Regeleinrichtungen, welche die Ventile betätigen, realisiert werden.

Wenn mehrere Wärmetauscher vorgesehen sind, können die kalten Seiten von mehreren, insbesondere von allen Wärmetauschern miteinander verbunden sein, so dass ein zu erwärmendes Fluid nacheinander in den Wärmetauschern erwärmt wird. Alternativ können einzelne Wärmetauscher auch individuell, d.h. separat voneinander zur Wärmeauskupplung eingesetzt werden. Ferner kann die Abgasleitung mit einer zum Verdichter führenden Verbrennungsluftzuführleitung verbunden sein, um der Verbrennungsluft vor dem Eintritt in den Verdichter Abgase zuzumischen. Dadurch, dass ein Teil des Abgases der Mikrogasturbine der Frischluft vor dem Verdichter zugeführt und mit dieser vermischt wird, kann der Wassergehalt im Abgas, je nach Rückführungsrate, entsprechend so erhöht werden, dass - bei entsprechender Rücklauftemperatur des in den Wärmetauschern erwärmten Mediums - der im Abgas enthaltene Wasserdampf auskondensiert und die dabei entstehenden sogenannte Kondensationswärme ausgekoppelt werden. Als Folge verbessert sich der thermische Wirkungsgrad der Anlage. Zudem reduziert das zugeführte Abgas die Flammentemperatur in der Brennkammer, wobei insbesondere die NOₓ-Emissionen reduziert werden können. In der Rückführungsleitung kann ein Wärmeübertrager vorgesehen sein, um einen möglichst hohen elektrischen Wirkungsgrad zu erzielen.

Hinsichtlich weiterer vorteilhafter Ausgestaltungen der Erfindung wird auf die Unteransprüche sowie die nachfolgende Beschreibung von Ausführungsbeispielen unter Bezugnahme auf die beiliegende Zeichnung verwiesen. In der Zeichnung zeigt:
- Figur 1: ein Schaltbild einer ersten Ausführungsform einer Mikrogasturbinenanordnung gemäß der vorliegenden Erfindung,
- Figur 1a: ein Schaltbild der ersten Ausführungsform einer Mikrogasturbinenanordnung gemäß Figur 1 mit Abgasrückführung;
- Figur 2: ein Schaltbild einer zweiten Ausführungsform einer erfindungsgemäßen Mikrogasturbinenanordnung,
- Figur 3: ein Schaltbild einer dritten Ausführungsform einer erfindungsgemäßen Mikrogasturbinenanordnung,
- Figur 4: ein Schaltbild einer Modifikation der in Figur 2 dargestellten Mikrogasturbinenanordnung,
- Figur 5: einen Ausschnitt einer flexiblen Wärmeauskopplung einer erfindungsgemäßen Mikrogasturbinenanordnung,
- Figur 5a: eine Variante der flexiblen Wärmeauskopplung gemäß Figur 5,
- Figur 6: ein Schaltbild eines Ausschnittes einer alternativen flexiblen Wärmeauskopplung für eine Mikrogasturbinenanordnung,
- Figur 7: ein Schaltbild einer weiteren Variante für eine flexible Wärmeauskopplung für eine Mikrogasturbinenanordnung,
- Figur 8: ein Schaltbild einer Variante der in Figur 1 dargestellten ersten Ausführungsform einer erfindungsgemäßen Mikroturbinenanordnung mit einer flexiblen Wärmeauskopplung,
- Figur 9: eine weitere Variante der in Figur 1 dargestellten ersten Ausführungsform einer erfindungsgemäßen Mikrogasturbinenanordnung mit einer flexiblen Wärmeauskopplung, und
- Figur 10: eine erweiterte Variante der in Figur 9 dargestellten Ausführungsform einer erfindungsgemäßen Mikrogasturbinenanordnung mit flexibler Wärmeauskopplung.

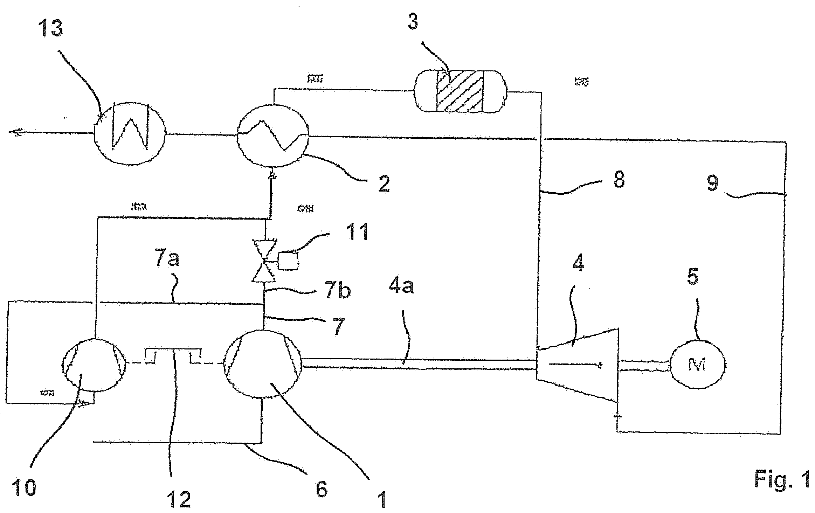

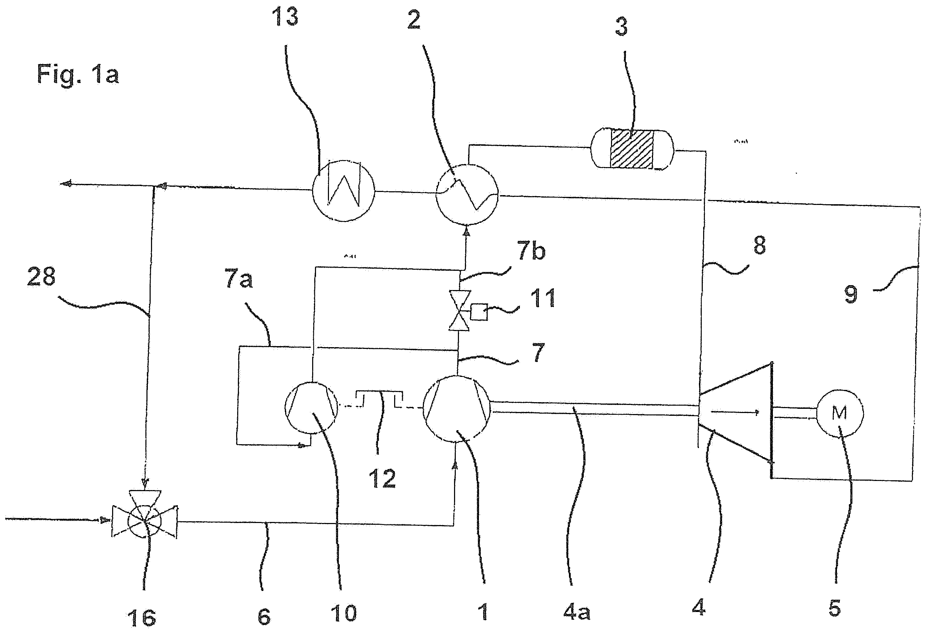

In der Figur 1 ist eine erste Ausführungsform einer Mikrogasturbinenanordnung gemäß der vorliegenden Erfindung schematisch dargestellt. Diese umfasst einen Verdichter bzw. Kompressor 1, einen Rekuperator 2, eine Brennkammer 3 und einer Turbine 4, die in Reihe geschaltet sind, sowie einen an die Turbine 4 angeschlossenen Generator 5. In dem Verdichter 1 wird angesaugte Frisch- bzw. Verbrennungsluft, die dem Verdichter 1 über eine Verbrennungsluftzuführleitung 6 zugeführt wird, verdichtet. Die verdichtete Verbrennungsluft wird anschließend über eine Verbrennungsluftleitung 7 dem Rekuperator 2 zugeführt, um sie dort vorzuwärmen. Die vorgewärmte Verbrennungsluft wird dann der nachgeschalteten Brennkammer 3 zugeführt, in welcher Brennstoff mit der vorgewärmten Verbrennungsluft verbrannt wird. Die bei der Verbrennung entstehenden heißen Abgase werden der Turbine 4 zugeführt, welche mit der Auslassseite der Brennkammer 3 über eine Rauchgasleitung 8 verbunden ist und durch die heißen Abgase aus der Brennkammer 3 angetrieben wird. Die Turbine 4 treibt einerseits den Verdichter 1 und andererseits den Generator 5 an, die hierzu auf der Turbinenwelle 4a sitzen. Auslassseitig ist die Turbine 4 mit der heißen Seite des Rekuperators 2 über eine Abgasleitung 9 verbunden, um die entspannten, warmen Abgase dem Rekuperator 2 zuzuführen, wo sie zur Vorwärmung der Verbrennungsluft verwendet werden. Die Mikrogasturbinenanordnung arbeitet nach dem Joule-Prozess, der allgemein bekannt ist und daher an dieser Stelle nicht näher erläutert werden soll.

Erfindungsgemäß ist zwischen dem Verdichter 1 und dem Rekuperator 2 ein Teillastverdichter 10 vorgesehen, der im Teillastbetrieb der Mikrogasturbinenanordnung zugeschaltet werden kann, so dass die im Verdichter 1 komprimierte Verbrennungsluft in dem Teillastverdichter 10 weiter komprimiert wird, bevor sie in den Rekuperator 2 eintritt, wobei im Volllastbetrieb der Teillastverdichter 10 weggeschaltet wird, so dass die im Verdichter 1 komprimierte Verbrennungsluft in an sich bekannter Weise unmittelbar in den Rekuperator 2 strömt, d.h. an dem Teillastverdichter 10 vorbeigeführt wird. Hierzu weist die Verbrennungsluftleitung 7 eine parallel zu dem Teillastverdichter 10 geschaltete und diesen umgehende Teillastverdichter-Bypassleitung 7b auf, in welcher ein Ventil 11 vorgesehen ist. Über das Ventil 11 kann die Teillastverdichter-Bypassleitung 7b geschlossen werden, so dass die aus dem Verdichter 1 austretende, komprimierte Verbrennungsluft direkt in den überbrückten Leitungsabschnitt 7a zu dem Teillastverdichter 10 geführt wird, um dort nachverdichtet zu werden, bevor sie in den Rekuperator 2 eintritt (Teillastbetrieb). Alternativ kann das Ventil 11 geöffnet werden, so dass die aus dem Verdichter 1 kommende Verbrennungsluft durch die Teillastverdichter-Bypassleitung 7b unmittelbar in den Rekuperator 2 strömt. Ein Strom durch den Teillastverdichter 10 findet dabei aufgrund des Strömungswiderstandes, den der Teillastverdichter 10 einem Luftstrom entgegensetzt, nicht statt. Das Ventil 11 kann als Schalt-, Steuer- oder Regelventil ausgebildet sein. Eine Ausbildung als Rückschlagklappe ist ebenso möglich.

Im Teillastbetrieb der Mikrogasturbine ist das Ventil 11 geschlossen. Die über die Verbrennungsluftzuführleitung 6 angesaugte Verbrennungsluft wird in dem Verdichter 1 aufgrund der im Vergleich zum Volllastfall geringen Drehzahl auf ein mittleres Druckniveau verdichtet. Um ein Volllastdruckniveau in Teillast zu erreichen, wird die Luft anschließend bei geschlossenem Ventil 11 in dem Teillastverdichter 10 auf das Volllastdruckniveau weiter verdichtet. Auf diese Weise kann die Turbineneintrittstemperatur aufgrund des hohen Druckniveaus - bei gleichbleibender Turbinenaustrittstemperatur - dasselbe Temperaturniveau wie im Volllastfall erreichen, so dass im Teillastbereich ein hoher Wirkungsgrad erzielt wird. Wie in Figur 1 erkennbar ist, wird im Teillastbetrieb die Welle des Teillastverdichters 10 mit der Turbinenwelle 4a über eine Kupplung 12 verbunden, so dass der Teillastverdichter 10 ebenfalls über die Turbine 4 angetrieben wird. Im Volllastbetrieb ist das Ventil 11 geöffnet, so dass die in dem Verdichter 1 komprimierte Luft an dem Teillastverdichter 10 vorbei unmittelbar dem Rekuperator 2 zugeführt wird. Der unterschiedliche Massenstrom bei ähnlichen Druckverhältnissen im Teil- und Volllastbetrieb kann durch geeignete Maßnahmen wie eine variable Turbinengeometrie (VTG) ermöglicht werden.

Zusätzlich ist dem Rekuperator 2 nachgeschaltet ein Wärmetauscher 13 vorgesehen, um die Restwärme der Abgase nutzen zu können. Ebenso kann die Abgasleitung stromabwärts von dem Wärmtauscher 13 durch eine Rückführungsleitung 28 über ein entsprechendes Mischventil 16 mit der Verbrennungsluft-Zuführleitung 6 verbunden sein, um der vom Verdichter 1 angesaugten Verbrennungsluft Abgase zuzumischen, wie dies in Figur 1a dargestellt ist.

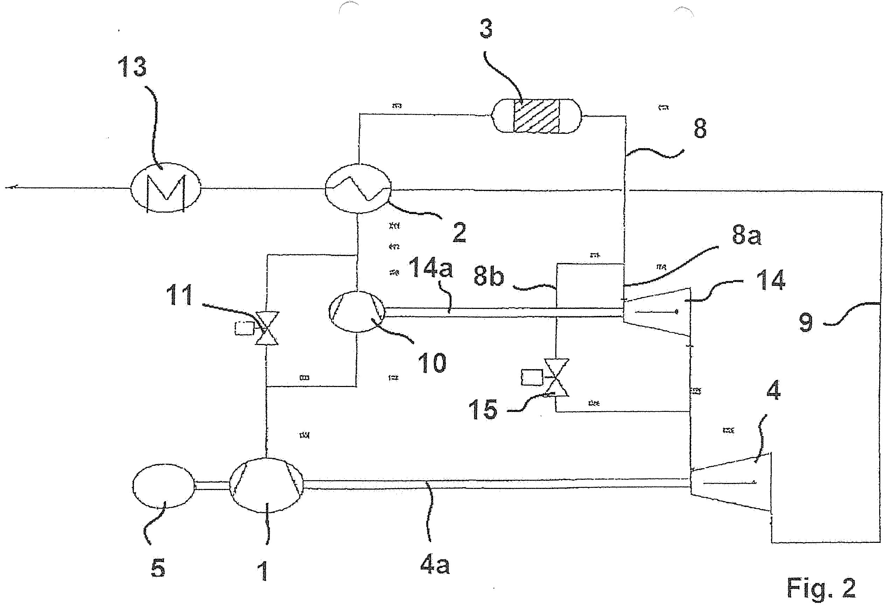

Bei der in Figur 1 dargestellten Mikrogasturbine wird das aus der Verbrennungskammer 3 austretende heißende Abgas nur über die Turbine 4 entspannt. Alternativ ist in der Figur 2 eine zweite Ausführungsform dargestellt, bei welcher die heißen Abgase im Teillastbetrieb der Mikrogasturbinenanordnung zweistufig entspannt werden, nämlich zunächst über eine der Turbine 4 vorgeschaltete Teillastturbine 14 und dann über die Turbine 4 selbst. Die Teillastturbine 14 ist in einer Rauchgasleitung 8 zwischen der Brennkammer 3 und der Turbine 4 angeordnet und kann wahlweise zugeschaltet werden. Hierzu weist die Rauchgasleitung 8 eine parallel zu der Teillastturbine 14 geschaltete und diese umgehende Teillastturbinen-Bypassleitung 8b auf, in der ein Ventil 15 angeordnet ist, über welcher die Teillastturbinen-Bypassleitung 8b geöffnet oder geschlossen werden kann.

Auf der Verdichterseite ist die Mikrogasturbine genauso ausgeführt wie bei der in Figur 1 dargestellten Ausführungsform. Der Teillastverdichter 10, der wie bei der in Figur 1 dargestellten Ausführungsform in der Verbrennungsluft-Bypassleitung 7a zwischen dem Verdichter 1 und dem Rekuperator 2 vorgesehen ist und im Teillastbetrieb zugeschaltet wird, sitzt dabei auf der Turbinenwelle 14a der Teillastturbine 14 und wird über diese angetrieben.

Im Teillastbetrieb der Mikrogasturbine ist das Ventil 11 geschlossen, so dass die über die Verbrennungsluftzuführleitung 6 angesaugte und in dem Verdichter 1 verdichtete Verbrennungsluft in dem Teillastverdichter 10 auf das Volllastdruckniveau weiter verdichtet wird, bevor sie in dem Rekuperator 2 vorgewärmt und in der Brennkammer 3 verbrannt wird. In gleicher Weise wird das Ventil 15 in der Teillastverdichter-Bypassleitung 8b geschlossen, so dass der heiße Abgasstrom aus der Brennkammer 3 zunächst über die Teillastturbine 14 und dann über die Turbine 4 entspannt wird.

Damit wird die Teillastturbine 14 eine Hochdruck-Turbinenstufe und die Turbine 4 eine Niederdruck-Turbinenstufe.

Im Volllastbetrieb sind die Ventile 11, 15 geöffnet, so dass die angesaugte Verbrennungsluft unter Umgehung des Teillastverdichters 10 nur in dem Verdichter 1 komprimiert und nur in der Turbine 4 unter Umgehung der Teillastturbine 14 entspannt wird.

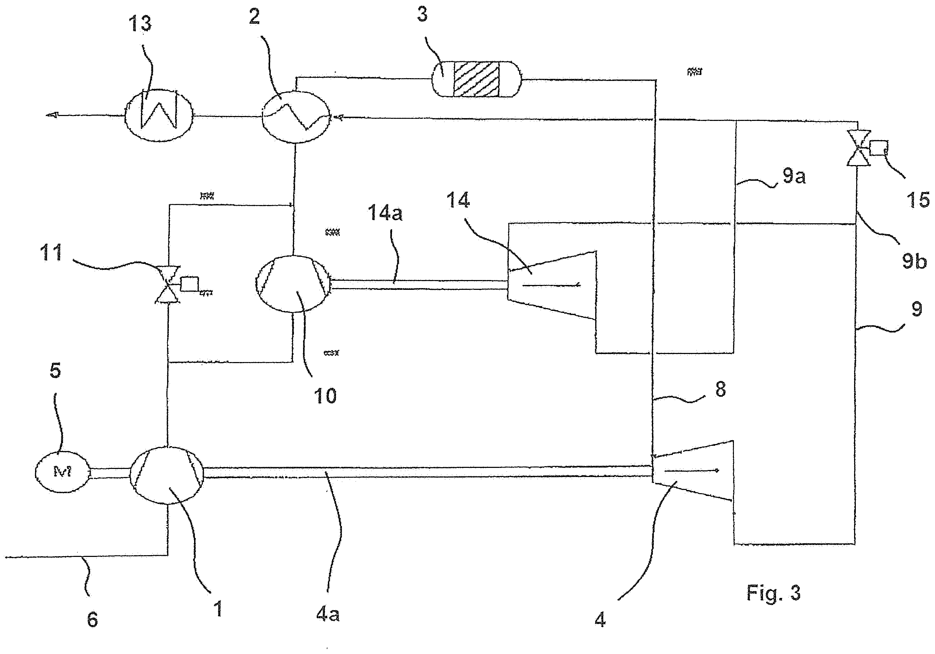

In Figur 3 ist eine alternative Ausführungsform zu der in Figur 2 dargestellten Variante dargestellt. Hier ist in gleicher Weise wie bei der ersten und zweiten Ausführungsform ein Teillastverdichter 10 in einem Leitungsabschnitt 7a der Brennungsluftleitung 7 vorgesehen, welcher über eine parallel dazu geschaltete Teillastverdichter-Bypassleitung 7b umgangen werden kann. Ebenso ist eine Teillastturbine 14 auf der Turbinenseite vorgesehen, wobei der Teillastverdichter 10 auf der Turbinenwelle 14a der Teillastturbine 14 sitzt. Im Unterschied zu der zweiten Ausführungsform ist die Teillastturbine 14 jedoch in einer Abgasleitung 9 vorgesehen, wobei parallel zu dem entsprechenden Leitungsabschnitt 9a der Abgasleitung 9 eine die Teillastturbine 14 umgehende Teillastturbinen-Bypassleitung 9b vorgesehen ist, in welcher ein Ventil 15 angeordnet ist, über welches die Teillastturbinen-Bypassleitung 9b im Teillastbetrieb abgesperrt werden kann. In diesem Fall werden dann im Teillastbetrieb die aus der Brennkammer 3 austretenden heißen Abgase zunächst in der Turbine 4 entspannt und die dann teilweise entspannten Abgase in der Teillastturbine 14 weiter teilentspannt. Somit bildet hier die Turbine 4 eine Hochdruck-Turbinenstufe und die Teillastturbine 14 eine Niederdruck-Turbinenstufe. Diese Ausgestaltung hat gegenüber der in Figur 2 dargestellten zweiten Ausführungsform einer erfindungsgemäßen Mikrogasturbinenanordnung den Vorteil, dass die Abgase nach dem Verlassen der Turbine 4 schon teilentspannt und damit abgekühlt sind, so dass das Ventil 15 thermisch weniger belastet ist als das entsprechende Ventil 15 bei der zweiten Ausführungsform. Damit kann das Ventil 15 vergleichsweise kostengünstig hergestellt werden oder besitzt bei gleicher Materialauswahl eine erhöhte Lebensdauer.

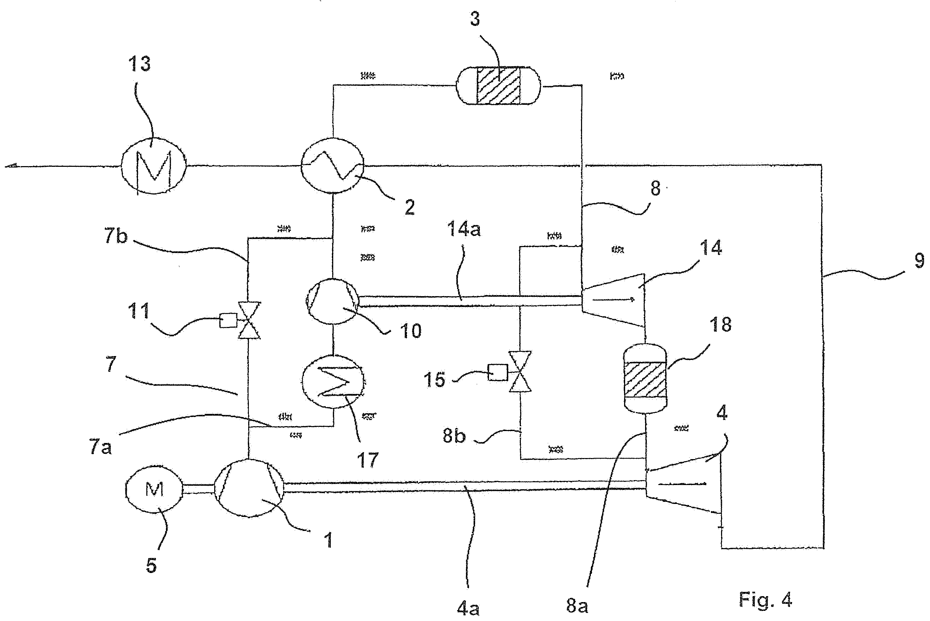

In der Figur 4 ist eine weitere Variante der zweiten Ausführungsform einer erfindungsgemäßen Mikrogasturbinenanordnung dargestellt. Hier ist ein Wärmetauscher 9 durch die Teillastverdichter-Bypassleitung 7b überbrückten Leitungsabschnitt 7a der Verbrennungsluftleitung 7 vor dem Teillastverdichter 10 vorgesehen, in dem die von dem Verdichter 1 komprimierte Verbrennungsluft zwischengekühlt wird. Damit wird die vom Teillastverdichter 9 zu erbringende und damit von der Teillastturbine 14 abzugreifende Arbeitsleistung verringert und der Wirkungsgrad der Gesamtanlage erhöht. Zusätzlich ist ein Zwischenüberhitzer in Form einer weiteren Brennkammer 18 in der Rauchgasleitung 8 der Teillastturbine 14 nachgeordnet vorgesehen, in welcher im Teillastbetrieb die von der Teillastturbine 14 teilweise entspannten Abgase vor dem Eintritt in den Verdichter 1 zwischenerhitzt werden. Durch die Zwischenüberhitzung wird die Arbeitsleistung der Turbine 4 und damit der Wirkungsgrad der Mikrogasturbinenanordnung gesteigert. Die Zwischenkühlung zwischen dem Verdichter 1 und dem Teillastverdichter 9 sowie die Zwischenerhitzung kann auch bei den anderen beschriebenen Ausführungsformen eingesetzt werden.

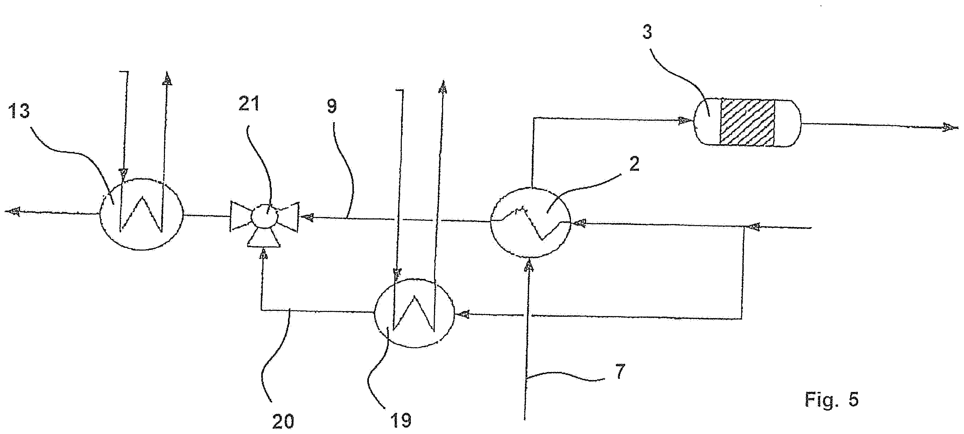

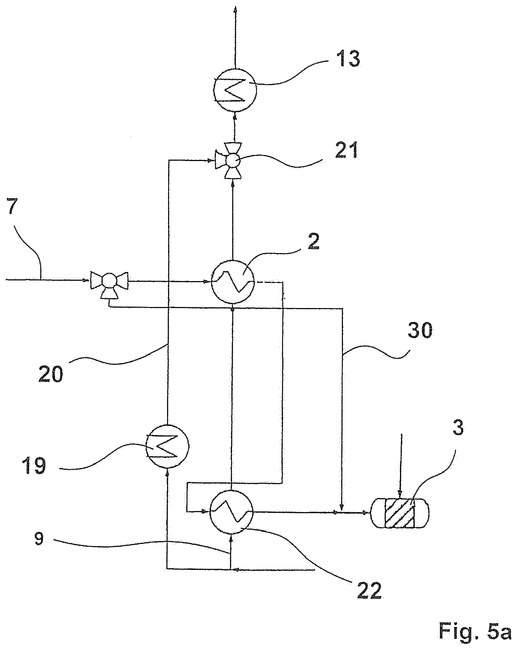

Alle vorbeschriebenen Ausführungsformen können zudem mit einer flexiblen Wärmeauskopplung zusätzlich zu der bestehenden Gaswärmenutzung über den Wärmetauscher 13, welcher dem Rekuperator 2 nachgeschaltet ist, realisiert werden. Ein Beispiel für eine solche flexible Wärmeauskopplung ist in der Figur 5 dargestellt. Hier ist ein zusätzlicher Wärmetauscher 19 parallel zu dem Rekuperator 2 in einer Rekuperator-Bypassleitung 20 angeordnet. Die Wärmeauskopplung erfolgt über eine Aufteilung des Abgasmassenstroms vor dessen Eintritt in den Rekuperator 2 in einen Teilstrom, welcher durch den Rekuperator 2 geführt wird, und/oder in einen Teilstrom, welcher dem Wärmetauscher 19 zugeführt wird. Die Steuerung der Abgasmassenströme erfolgt über ein Ventil 21 auf der stromabwärtigen Seite des Rekuperators 2/des Wärmetauschers 19. In dem dargestellten Ausführungsbeispiel ist das Ventil 21 an der Stelle vorgesehen, wo die Abgasleitung 9 und die Rekuperator-Bypassleitung 20 wieder zusammengeführt werden. Das Ventil 21 befindet sich damit auf der "kalten" Seite von Rekuperator 2/Wärmetauscher 19, so dass es thermisch wenig beansprucht wird.

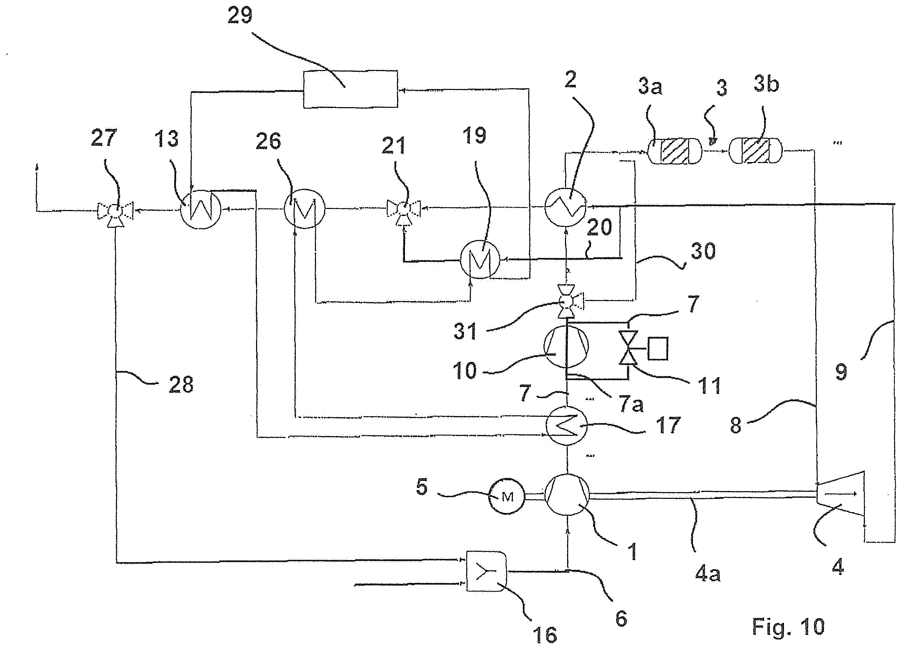

Im Normalbetrieb ist das Ventil 21 so eingestellt, dass der gesamte Abgasmassenstrom über den Rekuperator 2 geführt wird. Wird nun mehr Wärme zum Beispiel zur Warmwasser- oder Dampferzeugung benötigt als die Wärmeauskopplung über die ansonsten vorhandenen Wärmetauscher liefern kann, wird das Ventil 21 so eingestellt, dass der benötigte Abgasmassenstrom über den parallel zum Rekuperator 2 geschalteten weiteren Wärmetauscher 19 geleitet wird. Im Extremfall wird der gesamte Massenstrom über den Wärmetauscher 19 gleitet. Hierbei ist zu beachten, dass der Verbrennungsluftmassenstrom jederzeit über den Rekuperator 2 geführt wird und damit die Verbrennungsluft weniger vorgewärmt wird, wenn der Abgasmassenstrom nicht vollständig über den Rekuperator 2 geführt wird. Die flexible Wärmeauskopplung hat dementsprechend zur Folge, dass bei (vollständiger) Beaufschlagung des Wärmetauschers 19 der Brennstoffmassenstrom in der Brennkammer 3 gesteigert werden muss, was durch eine mehrstufige Brennkammer 3 erreicht werden kann (siehe Figur 10).

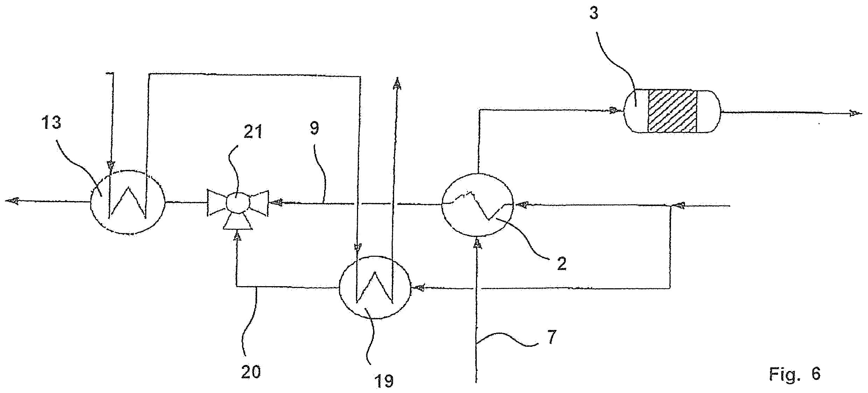

Die Wärmetauscher 13, 19 können, wie in der Figur 5 dargestellt ist, parallel geschaltet werden. Somit besteht die Möglichkeit, die Wärmetauscher 13, 19 zu unterschiedlichen Aufgaben wie beispielsweise der Dampferzeugung oder der Warmwasserbereitung heranzuziehen. Alternativ können die Wärmetauscher 13, 19, wie in Figur 6 dargestellt ist, in Reihe geschaltet werden. In diesem Fall wird - wie auch im Falle der 100%-igen Führung der Abgase durch den Rekuperator 2 - das im Wärmetauscher 13 erwärmte Wasser durch den Wärmetauscher 19 geleitet.

Ebenso ist es möglich, wie in Figur 5a dargestellt, in der Abgasleitung 9 mehrere Rekuperatoren 2, 22 in Reihe zu schalten, wobei dann der in Strömungsrichtung erste Rekuperator 2 einen Hochtemperatur-Rekuperator und der dahinterliegende Rekuperator 22 einen Niedertemperatur-Rekuperator bildet. Auf diese Weise kann insbesondere beim Niedertemperatur-Rekuperator 22 auf kostenintensive Werkstoffe (high temperature alloys) verzichtet werden. Die Rekuperator-Bypassleitung mit dem Wärmetauscher 19 oder anderen seriell geschalteten Wärmetauschern kann beide Rekuperatoren 2, 22 umgehen.

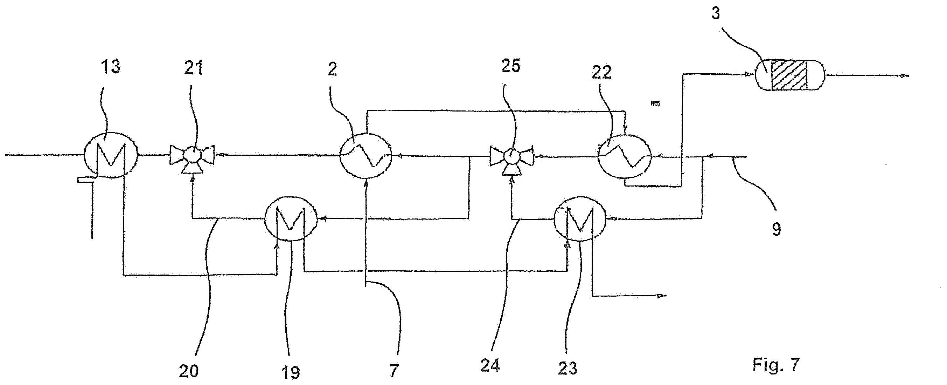

Optional kann jedem Rekuperator 2, 22 eine Rekuperator-Bypassleitung 20, 24 zugeordnet sein. In diesem Fall ist, wie in der Figur 7 dargestellt, ein weiterer Wärmetauscher 23 parallel zu dem Niedertemperatur-Rekuperator 22 geschaltet, wobei der Abgasdurchfluss durch den Niedertemperatur-Rekuperator 22 und den parallel dazu geschalteten Wärmetauscher 23 steuerbar ist. Hierzu ist ein entsprechendes Steuerventil 25 an der Stelle des Zusammenschlusses von der Abgasleitung 9 und der Rekuperator-Bypassleitung 24, in welcher der Wärmetauscher 23 platziert ist, vorgesehen.

Bei der in Figur 7 dargestellten Ausführungsform sind die vorhandenen Wärmetauscher 13, 19, 23 in Reihe geschaltet, wobei das von ihnen zu erhitzende Medium nacheinander von der kalten zur warmen Seite hin durchströmt werden. Alternativ ist es möglich, einen oder mehrere der Wärmetauscher 13, 19, 23 parallel abzugreifen.

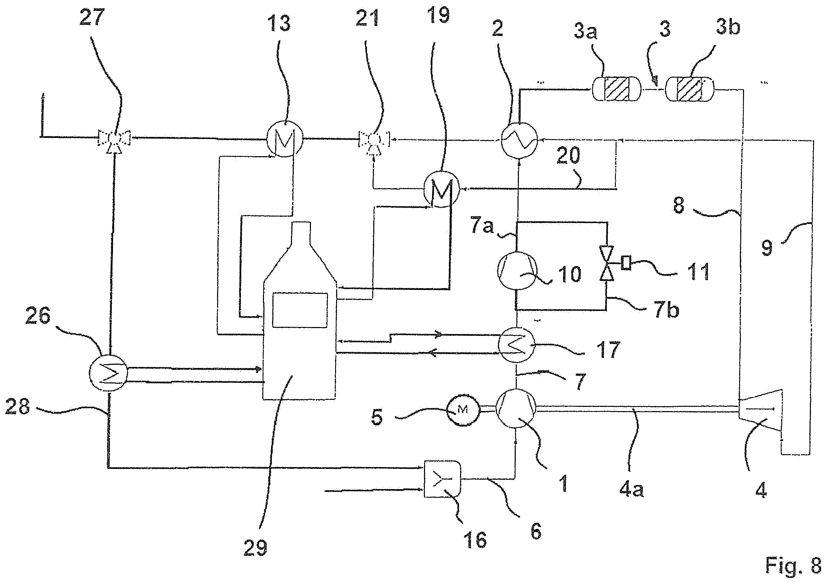

In der Figur 8 ist eine Mikrogasturbinenanordnung gemäß der anhand Figur 1 beschriebenen ersten Ausführungsform in der vorliegenden Erfindung mit einem Beispiel einer flexiblen Wärmeauskopplung dargestellt. Die Brennkammer 3 ist hier mehrstufig mit zwei seriell hintereinander liegenden Brennkammerstufen 3a, 3b ausgeführt. Zusätzlich ist ein Wärmetauscher 17 zwischen dem Verdichter 1 und dem Teillastverdichter 10 - dieser ist wie in Figur 1 mit der Turbinenwelle 4a über eine Kupplung verbindbar - in der Verbrennungsluftleitung vorgesehen. Des Weiteren ist ein Wärmetauscher 19 in einer Rekuperator-Bypassleitung 20 parallel zu dem Rekuperator 2 geschaltet, wobei ein Steuerventil 21 bzw. Regelventil an der Stelle, wo die Abgasleitung 9 und die Rekuperator-Bypassleitung 20 zusammengeführt werden, vorgesehen ist, um den Abgasstrom durch den Rekuperator 2 und den Wärmetauscher 19 einstellen zu können. Stromabwärts von dem Steuerventil 21 ist in der Abgasleitung 9 ein weiterer Wärmetauscher 13 vorgesehen. Schließlich ist die Abgasleitung 9 stromabwärts von dem Wärmetauscher 13 mit der Verbrennungsluft-Zuführleitung 6 über eine Rückführungsleitung 28, in welcher ebenfalls ein Wärmetauscher 26 vorgesehen ist, um den elektrischen Wirkungsgrad zu erhöhen, mit einer Mischeinrichtung 16 verbunden. An dem Anschlusspunkt der Rückführungsleitung 28 an die Abgasleitung 9 ist ein Steuerventil 27 vorgesehen, über welches der Abgas-Massenstrom, welcher der Verbrennungsluft-Zuführleitung 6 zugeführt wird, eingestellt werden kann. Sämtliche Wärmetauscher 13, 17, 19, 26 sind parallel mit einem Verbraucher, hier einem Schichtwärmespeicher 29 verbunden, um diesem Wärme zuzuführen.

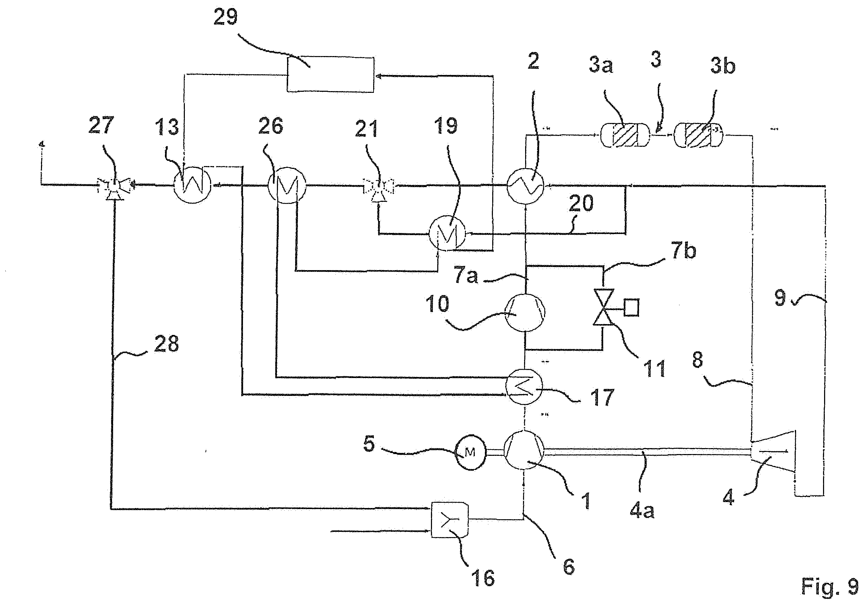

Figur 9 zeigt eine Variante der in Figur 8 dargestellten Ausführungsform. Hier ist allerdings der Wärmetauscher 26 nicht in der Rückführungsleitung 28 angeordnet, sondern in der Abgasleitung 9 stromabwärts von dem Steuerventil 21 vor dem Wärmetauscher 13 positioniert. Die Wärmetauscher 13, 17, 19, 26 sind hier auf ihrer kalten Seite in Reihe geschaltet, und werden nacheinander in dieser Reihenfolge von einem zu erwärmenden Medium durchströmt, wobei sie an einen zentralen Verbraucher 29 angeschlossen sind.

Figur 10 zeigt eine erweiterte Variante der in Figur 9 dargestellten Ausführungsform, bei welcher eine den Rekuperator 2 umgehende Bypassleitung 30 an die Verbrennungsluftleitung 7 vorgesehen ist. Die Bypassleitung 30 ist an die Verbrennungsluftleitung 7 stromabwärts von der Verbrennungsluft-Bypassleitung 7 angeschlossen und endet vor der Brennkammer 3. Ferner ist ein Ventil 31 vorgesehen, über welches der Massenstrom durch den Rekuperator 2 und/oder die Bypassleitung 30 eingestellt werden kann. Das Ventil 31 ist hier am eingangsseitigen Anschlusspunkt in der Bypassleitung 30 an die Verbrennungsluftleitung 7 positioniert. Die Einstellung der Massenströme durch den Rekuperator 2 erfolgt dabei in der Weise, dass der Massenstrom, der Verbrennungsluft durch den Rekuperator 2 dem Massenstrom des den Rekuperator 2 durchströmenden Abgases entspricht und vorzugsweise die Massenströme gleich groß sind.

## Patentansprüche

1. Mikrogasturbinenanordnung mit
- einem Verdichter (1), um Verbrennungsluft anzusaugen und zu verdichten,
- einer mit dem Verdichter (1) durch eine Verbrennungsluftleitung (7) verbundenen Brennkammer (3), in welcher Brennstoff mit der Verbrennungsluft verbrannt wird,
- einer Turbine (4), die mit der Auslassseite der Brennkammer (3) über eine Rauchgasleitung (8) verbunden ist und durch die heißen Abgase aus der Brennkammer (3) angetrieben wird, und
- einem Generator (5) zur Stromerzeugung,
wobei der Verdichter (1) und der Generator (5) auf einer gemeinsamen Turbinenwelle (4a) sitzen und über die Turbine (4) angetrieben werden,
wobei in der Verbrennungsluftleitung (7) zwischen dem Verdichter (1) und der Brennkammer (3) ein zuschaltbarer Teillastverdichter (10) angeordnet ist und die Verbrennungsluftleitung (7) eine parallel zu dem Teillasterverdichter (10) geschaltete und diesen umgehende Teillastverdichter-Bypassleitung (7b) aufweist, und wobei in der Verbrennungsluftleitung (7) Schaltmittel (11) vorgesehen sind, um in einem Teillastbetrieb der Mikrogasturbinenanordnung den Teillastverdichter (10) zuzuschalten, so dass von dem Verdichter (1) komprimierte Verbrennungsluft zu dem Teillastverdichter (10) geführt und dort weiter verdichtet wird, und im Volllastbetrieb den Teillastverdichter (10) wegzuschalten, so dass die im Verdichter (1) komprimierte Verbrennungsluft an dem Teillastverdichter (10) vorbei durch die Teillastverdichter-Bypassleitung (7b) unmittelbar in die Brennkammer (3) strömt, **dadurch gekennzeichnet, dass** in der Rauchgasleitung (8) zwischen der Brennkammer (3) und der Turbine (4) oder in einer sich an die Turbine (4) auslassseitig anschließenden Abgasleitung (9) eine zuschaltbare Teillastturbine (14) angeordnet ist und Schaltmittel (15) vorgesehen sind, die im Teillastbetrieb der Mikrogasturbinenanordnung die Teillastturbine (14) zuschalten, so dass die heißen Abgase aus der Brennkammer (3) hintereinander in der Teillastturbine (14) und der Turbine (4) entspannt werden, und im Volllastbetrieb der Mikrogasturbinenanordnung die Teillastturbine (14) abschalten, so dass die heißen Abgase an der Teillastturbine (14) vorbeiströmen und nur in der Turbine (4) entspannt werden.

2. Mikrogasturbinenanordnung nach Anspruch 1, **dadurch gekennzeichnet, dass** in der Verbrennungsluftleitung (7) zwischen dem Verdichter (1) und der Brennkammer (3) ein Rekuperator (2) vorgesehen ist, um vom Verdichter (1) komprimierte Verbrennungsluft vor dem Eintritt in die Brennkammer (3) vorzuwärmen, wobei die warme Seite des Rekuperators (2) mit der Turbine (4) über die Abgasleitung (9) verbunden ist, um dem Rekuperator (2) heiße Abgase zuzuführen, wobei insbesondere die zuschaltbare Teillastturbine (14) zwischen der Turbine und dem Rekuperator (2) angeordnet ist.

3. Mikrogasturbinenanordnung nach Anspruch 1 oder 2, **dadurch gekennzeichnet, dass** als Schaltmittel wenigstens ein Ventil (11) in der Teillastventil-Bypassleitung (7b) der Verbrennungsluftleitung (7) angeordnet ist.

4. Mikrogasturbinenanordnung nach einem der vorherigen Ansprüche, **dadurch gekennzeichnet, dass** der Teillastverdichter (10) mit der Turbinenwelle (4a) im Teillastbereich über eine Kupplung (12) verbunden ist und von dieser angetrieben wird und im Volllastbetrieb von der Turbinenwelle (4a) entkoppelt ist.

5. Mikrogasturbinenanordnung nach einem der vorherigen Ansprüche, **dadurch gekennzeichnet, dass** die Rauchgasleitung (8) oder die Abgasleitung (9) eine parallel zu der Teillastturbine (14) geschaltete und diese umgehende Teillastturbinen-Bypassleitung (8b, 9b) aufweist.

6. Mikrogasturbinenanordnung nach einem der vorherigen Ansprüche, **dadurch gekennzeichnet, dass** zwischen der Turbine (4) und der Teillastturbine (14) ein Zwischenüberhitzer insbesondere in der Form einer weiteren Brennkammer (18) vorgesehen ist, in welcher im Teillastbetrieb die heißen Abgase weiter erwärmt werden.

7. Mikrogasturbinenanordnung nach einem der vorherigen Ansprüche, **dadurch gekennzeichnet, dass** zwischen dem Verdichter (1) und dem Teillastverdichter (10) eine Kühleinrichtung vorgesehen ist, in welchem im Teillastbetrieb die von dem Verdichter (1) komprimierte Luft vor dem Eintritt in den Teillastverdichter (10) abgekühlt wird.

8. Mikrogasturbinenanordnung nach Anspruch 2 und ggf. einem weiteren der vorherigen Ansprüche, **dadurch gekennzeichnet, dass** dem Rekuperator (2) vor- und/oder nachgeschaltet wenigstens ein Wärmetauscher (13) in der Abgasleitung (9) angeordnet ist, um aus der Mikrogasturbine Wärme auszukoppeln.

9. Mikrogasturbinenanordnung nach Anspruch 2 und ggf. einem weiteren der vorherigen Ansprüche, **dadurch gekennzeichnet, dass** in der Abgasleitung (9) seriell zu dem Rekuperator (2) wenigstens ein weiterer Rekuperator (22) vorgesehen ist, wobei die Rekuperatoren (2, 22) auf der kalten Seite nacheinander von der verdichteten Verbrennungsluft und auf der heißen Seite von den heißen Abgasen durchströmt werden.

10. Mikrogasturbinenanordnung nach Anspruch 9, **dadurch gekennzeichnet, dass** in der Abgasleitung (9) parallel zu einem Rekuperator (2) in einer Rekuperator-Bypassleitung (20) wenigstens ein Wärmetauscher (19) und parallel zu einem weiteren Rekuperator (22) in einer weiteren Rekuperator-Bypassleitung (24) wenigstens ein Wärmetauscher (23) angeordnet ist, um Wärme aus der Mikrogasturbinenanordnung auszukoppeln, wobei der Abgasstrom durch die Rekuperatoren (2, 22) einerseits und/oder die jeweils parallel dazu geschalteten Wärmetauscher (19, 23) andererseits durch entsprechende Ventilmittel (21, 25) steuerbar ist.

11. Mikrogasturbinenanordnung nach Anspruch 10, **dadurch gekennzeichnet, dass** die Ventilmittel (21, 25) zur Steuerung des Abgasstroms jeweils stromabwärts von den Rekuperatoren (2, 22) und den parallel dazu geschalteten Wärmetauschern (19, 23) angeordnet sind und insbesondere jeweils an der Stelle positioniert sind, wo die Abgasleitung (9) und die Rekuperator-Bypassleitungen (20, 24), in denen die Wärmetauscher (19, 23) angeordnet sind, zusammengeführt werden.

12. Mikrogasturbinenanordnung nach Anspruch 2 und ggf. einem weiteren der vorherigen Ansprüche, **dadurch gekennzeichnet, dass** in der Abgasleitung (9) parallel zu dem Rekuperator (2)/den Rekuperatoren (2, 22) wenigstens ein Wärmetauscher (19, 23) angeordnet ist, um Wärme aus der Mikrogasturbinenanordnung auszukoppeln, wobei der Abgasstrom durch den Rekuperator (2)/die Rekuperatoren (2, 22) einerseits und/oder den parallel dazu geschalteten Wärmetauscher (19, 23) andererseits durch entsprechende Ventilmittel (21) steuerbar ist.

13. Mikrogasturbinenanordnung nach Anspruch 12, **dadurch gekennzeichnet, dass** die Ventilmittel (21) zur Steuerung des Abgasstroms stromabwärts von dem Rekuperator (2)/den Rekuperatoren (2, 22) und dem Wärmetauscher (19) insbesondere an der Stelle, wo die Abgasleitung (9) und die parallele Rekuperator-Bypassleitung (20), in welcher der Wärmetauscher (19) vorgesehen ist, zusammengeführt werden, vorgesehen ist.

14. Mikrogasturbinenanordnung nach Anspruch 2 und ggf. einem weiteren der vorherigen Ansprüche, **dadurch gekennzeichnet, dass** in der Verbrennungsluftleitung (7) stromabwärts von dem Teillastverdichter (10) eine den Rekuperator (2)/die Rekuperatoren (2, 22) umgehende Bypassleitung (30) vorgesehen ist, und dass Ventilmittel (31) vorgesehen sind, um den Abgasstrom durch den Rekuperator (2)/die Rekuperatoren (2, 22) und/oder die parallele Bypassleitung (30) insbesondere in der Weise zu steuern, dass die Massenströme der durch den Rekuperator (2)/die Rekuperatoren (2, 22) strömenden Verbrennungsluft und der durch den Rekuperator (2)/die Rekuperatoren (2, 22) strömenden Abgase gleich ist.
